# EUROPÄISCHE PATENTANMELDUNG

(11) **EP 4 775 335 A1**
(43) Veröffentlichungstag der Anmeldung: **15.07.2026**
(21) Anmeldenummer: 25151527.6
(22) Anmeldetag: 13.01.2025
(51) Int. Cl.: B23B 29/20, B23B 31/30, B23B 31/42, B23B 29/24

(54) **WERKZEUGHALTER**

(71) Anmelder: PCM Precision Tooling SA, 1844 Villeneuve (CH)
(72) Erfinder: Berchtold, Stephan, 3302 Moosseedorf (CH)
(74) Vertreter: Gachnang AG Patentanwälte

(57) **Zusammenfassung**

Der erfindungsgemässe Werkzeughalter (1) umfasst ein Gehäuse (2), das an einer Trageinrichtung einer Bearbeitungsmaschine befestigt werden kann. Am Gehäuse (2) ist eine Welle (5) drehbar gelagert, welche beim vorderen Ende (5a) eine Werkzeugaufnahme (6) und beim hinteren Ende (5b) einen Antriebsanschluss (9) aufweist, der von einer Antriebsübertragung der Trageinrichtung antreibbar ist. Die Werkzeugaufnahme (6) weist bei einem Kontaktbereich (11), an welchen der Anschlussbereich (7a) des zu spannenden Werkzeuges (7) anlegbar ist, eine konzentrisch zur Wellenachse ausgebildete mit einem Druckmedium befüllbare Druckkammer (12) auf. Die Druckkammer (12) ist in der Welle (5) über eine Druckmedium-Verbindung (13) mit einer Druckerzeugungs-Vorrichtung (14) verbunden. Die Druckerzeugungs-Vorrichtung (14) ist in einem vorderen Endbereich der Welle (5) angeordnet. Der Werkzeughalter (1) ist einfach aufgebaut und eignet sich besonders zum Spannen von angetriebenen Werkzeugen (7), die selten ausgewechselt werden.

## Beschreibung

Die Erfindung bezieht sich auf Werkzeughalter nach dem Oberbegriff des Anspruchs 1.

Werkzeughalter mit einem Gehäuse und einer daran drehbar gelagerten Welle ermöglichen das Halten von Werkzeugen, die bei der Bearbeitung von Werkstücken drehen. Die Werkzeughalter mit geführten, drehenden Werkzeugen werden als angetriebene Werkzeuge bezeichnet und mit dieser Bezeichnung von den fest am Werkzeughalter angeordneten und vom Werkzeughalter lediglich geführten Werkzeugen abgegrenzt. Angetriebene Werkzeuge können bezüglich der Werkzeugdrehachse für axiale und radiale Bearbeitungen und für Kombinationen davon eingesetzt werden.

Angetriebene Werkzeuge werden beispielsweise bei Drehmaschinen für Komplettbearbeitungen eingesetzt, so dass nebst dem Drehen auch das Fräsen, Bohren oder andere Bearbeitungen ermöglicht werden. Gängige angetriebene Werkzeuge sind Werkzeughalter mit einem daran drehbar angeordneten Fräser, Abwälzfräser, Gewindefräser, Verzahnungsfräser, Bohrer, Kegelsenker, Gewindeschneider, einer Reibahle oder gegebenenfalls auch einer Kreissäge. Bearbeitungsmaschinen mit drehend oder fest gehaltenen Werkstücken und mit geführten festen und angetriebenen Werkzeugen ermöglichen eine Komplettbearbeitung von Werkstücken. Drehmaschinen mit festen und angetrieben geführten Werkzeugen können ausgehend von stabförmigem Material ohne Umspannung des Werkstückes Produkte mit vielfältigen Formen herstellen.

Bei den bekannten angetriebenen Werkzeugen ist die Verbindung zwischen dem Werkzeughalter und dem Werkzeug mit einer Spannzange ausgebildet, insbesondere mit einer ER-Spannzange. Dabei umfasst der Werkzeughalter am vorderen, dem Werkzeug zugeordneten Ende der am Gehäuse drehbar gelagerten Welle eine kegelstumpfförmige bzw. konische Aufnahmeöffnung bzw. Spannzangenaufnahme, in dieser eine radial geschlitzte Hülse bzw. Spannzange mit einer kegelstumpfförmigen bzw. konischen Aussenform und einer zentralen Bohrung zur Aufnahme eines Werkzeugschaftes. Im technischen Bereich wird ein Kegelstumpf oft als Konus bzw. als konisch bezeichnet. Zum Spannen eines in die zentrale Bohrung eingesetzten Werkzeugs wird die Spannzange mit einer auf ein Aussengewinde der Welle aufschraubbaren Überwurfmutter in die Spannzangenaufnahme gedrückt, wobei die zentrale Bohrung verengt wird und der Schaft des Werkzeugs kraftschlüssig in der Spannzange sowie die Spannzange kraftschlüssig in der Welle gehalten wird.

Zum Positionieren und Führen von festen und angetriebenen Werkzeugen umfassen die Werkzeugmaschinen trommelförmige und/oder säulenartige Trageinrichtungen mit Aufnahmen für die Werkzeughalter. Die Trageinrichtungen sind mit den daran angeordneten Werkzeughaltern relativ zum zu bearbeitenden Werkstück bewegbar. Es gibt auch Trageinrichtungen bei denen der Werkzeughalter mit Zylinderstiften positioniert wird.

Bei Langdrehmaschinen wird das zu bearbeitende, stangenförmige Material in der Drehmaschinen-Spindel eingespannt und in einer Führungsbüchse geführt. Beim Bearbeiten des stangenförmigen Materials wird dieses so positioniert, dass die Bearbeitung mit Werkzeugen möglichst nahe bei der Führungsbüchse erfolgt.

Das stangenförmige Material ist dadurch während des gesamten Bearbeitungsprozesses optimal vor Deformation, insbesondere Durchbiegung, geschützt. Für Anwendungen mit hoher Komplexität werden nebst den festen Werkzeugen zum Drehen auch antreibbare Werkzeuge mit jeweiligen Achsen zur Bearbeitung des nicht drehenden stangenförmigen Materials, bzw. Werkstücks, eingesetzt.

Langdrehmaschinen werden beispielsweise für die als Decolletage bezeichnete Herstellung von metallischen Kleinteilen verwendet. Solche Kleinteile werden beispielsweise für die Uhren- oder Medizinal-Industrie sowie die Mikrotechnik und Mikromechanik hergestellt. Die bei der Herstellung von Kleinteilen verwendeten geführten, drehenden Werkzeuge haben quer zur Werkzeugachse meist kleine Durchmesser und entsprechend muss die Verbindung zwischen dem Werkzeughalter und dem Werkzeug klein und präzise ausgebildet werden. Das kleine und präzise Ausbilden der Spannzangenaufnahme, der Spannzange, des Aussengewindes der Welle und des Innengewindes der Überwurfmutter ist äusserst aufwendig.

DE 10 2004 044 187 A1 beschreibt ein Bearbeitungszentrum mit einem Revolverkopf, an dem Werkzeughalter für antreibbare Werkzeuge in Montagebohrungen angeordnet sind. Jeder Werkzeughalter umfasst ein Gehäuse, in dem eine Welle über zwei voneinander beabstandete Drehlager drehbar gelagert ist. Zwischen den beiden Drehlagern befindet sich an der Welle ein Rotor und am Gehäuse ein Stator eines Antriebsmotors.

Am vorderen, dem Werkzeug zugeordneten Ende der Welle weist die Welle eine kegelstumpfförmige bzw. konische Spannzangenaufnahme auf. Diese Spannzangenaufnahme nimmt die Spannzange auf, welche zusammen mit einer Überwurfmutter ermöglicht den Schaft eines Werkzeugs kraftschlüssig in der Spannzange und die Spannzange kraftschlüssig an der Welle festzuhalten.

Die bekannten Werkzeughalter sind komplex aufgebaut und für ihre Herstellung sind aufwendige Bearbeitungsschritte nötig. Der komplexe Aufbau ist dafür ausgelegt, dass die darin eingespannten Werkzeuge mit kleinem Aufwand und kleiner Abnützung der Spannzange sowie der verwendeten Werkzeuge häufig gewechselt werden können.

Bei Werkzeugmaschinen mit Trageinrichtungen für viele angetriebene Werkzeuge können einzelne Werkzeuge sehr lange im Werkzeughalter verbleiben. Wenn angetriebene Werkzeuge aufgrund der seltenen Benützung oder aufgrund ihrer hohen Qualität selten am Werkzeughalter gewechselt werden, ist der hohe Herstellungsaufwand der bekannten Werkzeughalter nicht gerechtfertigt.

Die erfindungsgemässe Aufgabe besteht nun darin einen Werkzeughalter für angetriebene Werkzeuge zu finden, der für Werkzeuge, die selten ausgewechselt werden, einen einfachen Aufbau aufweist.

Die Aufgabe wird durch die Merkmale des Patentanspruchs 1 gelöst. Die abhängigen Patentansprüche beschreiben vorteilhafte Ausführungsvarianten, welche weitere Aufgaben lösen.

Ein erfindungsgemässer Werkzeughalter umfasst ein Gehäuse, das einen Positionieranschluss für das Positionieren an einer Trageinrichtung einer Bearbeitungsmaschine aufweist, und eine sich entlang einer Wellenachse erstreckende Welle. Bei einem vorderen Ende der Welle umfasst der Werkzeughalter eine Werkzeugaufnahme zum Spannen des Anschlussbereiches eines Werkzeuges. Die Welle ist am Gehäuse von einer Drehlagerung um die Wellenachse drehbar gelagert. Die Drehlagerung der Welle umfasst ein vorderes und ein hinteres Drehlager, von denen das vordere Drehlager näher bei einem vorderen Ende der Welle liegt als das hintere. Die Welle weist bei einem vom vorderen Ende abgewandten hinteren Ende einen Antriebsanschluss auf, welcher so ausgebildet ist, dass er nach dem Anordnen des Werkzeughalters an der Trageinrichtung von einer Antriebsübertragung der Trageinrichtung antreibbar ist. Die Werkzeugaufnahme weist bei einem Kontaktbereich, an welchen der Anschlussbereich des zu spannenden Werkzeuges anlegbar ist, eine konzentrisch zur Wellenachse ausgebildete, mit einem Druckmedium befüllbare Druckkammer auf. Die Druckkammer ist in der Welle über eine Druckmedium-Verbindung mit einer Druckerzeugungs-Vorrichtung verbunden. Die Druckerzeugungs-Vorrichtung ist in einem Bereich angeordnet, der sich vom vorderen Ende der Welle bis zum vorderen Drehlager erstreckt. Die Druckkammer macht bei an den Kontaktbereich angrenzendem Anschlussbereich des Werkzeugs und bei von der Druckerzeugungs-Vorrichtung aufgebautem Druck in der Druckkammer zwischen dem Kontaktbereich und dem Anschlussbereich des Werkzeuges durch eine Verformung des Kontaktbereichs gegen den Anschlussbereich eine kraftschlüssig Verbindung erzielbar.

Als Druckmedium wird vorzugsweise Öl oder gegebenenfalls Fett verwendet.

Das erfindungsgemässe Ausbilden der bei einem Kontaktbereich angeordneten, mit einem Druckmedium befüllbaren Druckkammer, der Druckmedium-Verbindung und der Druckerzeugungs-Vorrichtung ist wesentlich weniger aufwendig als die Herstellung der Teile, welche für die aus dem Stand der Technik bekannten Werkzeughalter benötigt werden, nämlich die kegelstumpfförmige Spannzangenaufnahme, die ER-Spannzange, die Überwurfmutter die zum Spannen nötigen Gewinde. Nebst der weniger aufwendigen Herstellung hat die erfindungsgemässe Lösung auch den Vorteil, dass sie kürzer baut, weil die Druckerzeugungs-Vorrichtung in einem Bereich angeordnet ist, der sich vom vorderen Ende der Welle bis zum vorderen Drehlager erstreckt. Bei Werkzeughaltern mit Spannzangen, steht die Überwurfmutter über die Welle vor.

Bei einer voreilhaften Ausführung weist die Druckkammer mindestens zwei konzentrisch zur Wellenachse ausgebildete Druckkammerbereiche auf, welche relativ zueinander in Richtung der Wellenachse beabstandet angeordnet sind. Die Druckkammerbereiche machen bei von der Druckerzeugungs-Vorrichtung in der Druckkammer aufgebautem Druck zwischen dem Kontaktbereich und dem Anschlussbereich des Werkzeuges durch Verformungen des Kontaktbereichs bei den mindestens zwei Druckkammerbereichen gegen den Anschlussbereich eine kraftschlüssige Verbindung erzielbar. Gegebenenfalls werden anstelle einer Druckkammer mit mindestens zwei Druckkammerbereichen mindestens zwei Druckkammern vorgesehen, welche die gewünschten Verformungen des Kontaktbereichs erzielbar machen.

Gemäss einer bevorzugten Ausführungsform weist die Druckerzeugungs-Vorrichtung in der Welle eine Druckerzeugungs-Bohrung mit Gewinde und eine in diese Druckerzeugungs-Bohrung einschraubbare Druckschraube auf. Das in die Druckkammer und die Druckmedium-Verbindung eingefüllte Druckmedium macht durch das Einschrauben der Druckschraube den für die kraftschlüssige Verbindung nötigen Druck in der Druckkammer erzielbar. Bei einer Ausführung mit mehr als einer Druckkammer können die Druckkammern mit einer gemeinsamen Druckerzeugungs-Vorrichtung oder gegebenenfalls mit je einer eigenen Druckerzeugungs-Vorrichtung verbunden sein.

Damit das Druckmedium bei der Druckschraube nicht entweichen kann, umfasst die Druckerzeugungs-Vorrichtung einer besonders vorteilhaften Ausführungsform bei dem der Druckmedium-Verbindung zugewandten Ende der Druckschraube in einem gewindefreien Bereich der Druckerzeugungs-Bohrung einen Dichtungskolben. Gegebenenfalls ist zwischen der Druckschraube und dem Dichtungskolben ein Druckkolben angeordnet.

Bei einer weiteren, bevorzugten Ausführungsform ist die Druckkammer über eine in der Welle ausgebildete Entlüftungs-Verbindung mit einer verschliessbaren Entlüftungs-Vorrichtung verbunden, wobei die verschliessbare Entlüftungs-Vorrichtung in einem Bereich angeordnet ist, der sich vom vorderen Ende der Welle bis zum vorderen Drehlager erstreckt.

Eine vorteilhafte Entlüftungs-Vorrichtung weist in der Welle eine Entlüftungs-Bohrung mit Gewinde und eine in diese Entlüftungs-Bohrung mit Gewinde einschraubbare Entlüftungsschraube auf. Nach dem Einfüllen des Druckmediums kann beim Einschrauben der Entlüftungsschraube Luft oder Druckfluid durch einen Austrittskanal der Entlüftungsschraube austreten. Wenn die eingeschraubte Entlüftungsschraube mit einem Dichtungsbereich ihres vorausgehenden Endes an einer Verengung der Entlüftungs-Bohrung anliegt, ist die Entlüftungs-Bohrung verschlossen und in der Druckkammer, in der Druckmedium-Verbindung und in der Entlüftungs-Verbindung ist nur Druckmedium enthalten, so dass der für die kraftschlüssige Verbindung nötige Druck durch die Druckerzeugungs-Vorrichtung ohne Störung durch komprimierbare Restluft erzielbar ist.

Bei einer bevorzugten Ausführungsform erstrecken sich die Achsen der Entlüftungs-Vorrichtung, der Entlüftungs-Verbindung und der Druckmedium-Verbindung entlang einer gemeinsamen Geraden, welche insbesondere die Wellenachse schneidet. Beim Einfüllen des Druckmediums durch die Druckmedium-Verbindung kann die Welle so ausgerichtet werden, dass das Druckmedium aufsteigend die Druckmedium-Verbindung, die Druckkammer und die Entlüftungs-Verbindung auffüllt.

Die Achse der Bohrung der Druckerzeugungs-Vorrichtung erstreckt sich in einer weiteren vorteilhaften Ausführung tangential zu einem Kreis um die Wellenachse, so dass sich diese Bohrung im Vergleich zu einer radialen Bohrung über eine grössere Länge in der Welle erstrecken kann.

Die Zugänge zur Druckerzeugungs-Bohrung und zur Entlüftungs-Bohrung sind vorzugsweise so angeordnet, dass bei einer passenden Wellenlage beide Zugänge oberhalb der Druckkammer liegen. Nach dem vollständigen Befüllen mit Druckmedium wird bei einem nach oben gerichteten Zugang zur Druckerzeugungs-Bohrung die Druckschraube, vorzugsweise mit Dichtungskolben und insbesondere mit Druckkolben, in die Druckerzeugungs-Bohrung eingeführt. Anschliessend wird die Entlüftungsschraube eingeschraubt.

Bei einer besonders bevorzugten Ausführungsform weist die Werkzeugaufnahme beim Kontaktbereich ein konzentrisch zur Wellenachse in der Welle ausgebildetes zylindrisches Loch und in diesem eine der Wellenachse zugewandte zylindrische Kontaktfläche auf. Diese Ausführungsform ist zur Aufnahme eines Anschlussbereichs des Werkzeuges in der Form eines zylindrischen Schaftes ausgelegt, wobei die von der Kontaktfläche umgebene Öffnung einen Durchmesser aufweist, der an den Durchmesser eines einzusetzenden Werkzeugschaftes so angepasst ist, dass der Werkzeugschaft gerade noch in die von der Kontaktfläche umgebene Öffnung einführbar ist und dass bei von der Druckerzeugungs-Vorrichtung in der Druckkammer aufgebautem Druck zwischen dem Kontaktbereich und dem Anschlussbereich des Werkzeuges durch eine Verformung des Kontaktbereichs gegen den Werkzeugschaft eine kraftschlüssig Verbindung erzielbar ist.

Bei einer anderen Ausführungsform weist die Werkzeugaufnahme beim Kontaktbereich einen konzentrisch zur Wellenachse ausgebildeten zylindrischen Endbereich und an diesem eine von der Wellenachse abgewandte zylindrische Kontaktfläche auf. Diese Ausführungsform ist zur Aufnahme eines Anschlussbereichs des Werkzeuges in der Form einer zylindrischen Bohrung ausgelegt, wobei die von der Wellenachse abgewandte zylindrische Kontaktfläche einen Durchmesser aufweist, der an den Durchmesser der zylindrischen Bohrung des einzusetzenden Werkzeugs so angepasst ist, dass das Werkzeug über den von der Kontaktfläche gebildeten Zylinderabschnitt schiebbar ist und dass bei von der Druckerzeugungs-Vorrichtung in der Druckkammer aufgebautem Druck zwischen dem Kontaktbereich und dem Anschlussbereich des Werkzeuges durch eine Verformung des Kontaktbereichs gegen die zylindrische Bohrung des eingesetzten Werkzeugs eine kraftschlüssig Verbindung erzielbar ist.

Bei vorteilhaften Ausführungen ist die Kontaktfläche an einer mit der Welle verbundenen Hülse ausgebildet. Die Hülse berandet die Druckkammer gegen den Anschlussbereich des zu spannenden Werkzeugs und ist bei ihren stirnseitigen Enden dicht mit der Welle verbunden. Insbesondere ist die Druckkammer als von der Kontaktfläche abgewandt angeordnete Ausnehmung in der Hülse ausgebildet.

Bei einer Ausführung mit mindestens zwei Druckkammerbereichen ist zwischen den mindestens zwei Druckkammerbereichen eine Abtrennung ausgebildet, welche Abtrennung beispielsweise von einem Steg der Welle oder von einem Bereich der Hülse ohne Ausnehmung oder mit einer weniger tiefen Ausnehmung gebildet sein kann. Die Abtrennung gewährleistet, dass sich die Hülse bei Druckbeaufschlagung dort weniger verformt, bzw. dass sich die Hülse bei den Druckkammerbereichen stärker verformt. Eine stärkere Verformung in mindestens zwei voneinander beabstandeten Bereichen erhöht die Ausrichtungsgenauigkeit eines eingesetzten Werkzeuges.

Ein vorteilhafter Werkzeughalter umfasst einen an den Kontaktbereich anschliessenden Adapter, der an einen vom Kontaktbereich abweichenden Anschlussbereich des Werkzeugs angepasst ist. Wenn der Adapter zwischen dem Kontaktbereich der Werkzeughalters und dem Anschlussbereich des Werkzeugs eingesetzt ist, macht ein von der Druckerzeugungs-Vorrichtung in der Druckkammer aufgebauter Druck eine Verformung des Adapters gegen den Anschlussbereich des zu spannenden Werkzeuges und mit dieser Verformung eine kraftschlüssige Verbindung vom Kontaktbereich über den Adapter zum Anschlussbereich des zu spannenden Werkzeugs erzielbar.

Gemäss einer weiteren vorteilhaften Ausführungsform umfasst der Positionieranschluss für das Positionieren an einer Trageinrichtung einer Bearbeitungsmaschine mindestens eine Anschlussfläche, welche zum Positionieren des Werkzeughalters an eine Positionierfläche der Trageinrichtung anlegbar ist. Die Anschlussfläche kann von einem Bereich des Gehäuses, insbesondere einer zylindrischen Aussenfläche des Gehäuses, gebildet werden, welcher Bereich passend an eine Positionierfläche, insbesondere eine zylindrische Innenfläche, der Trageinrichtung anlegbar ist. Die Anschlussfläche kann auch beispielsweise als Innenfläche einer Bohrung oder als Aussenfläche eines Bolzens ausgebildet sein, wobei die Bohrung bzw. der Bolzen am Positionieranschluss ausgebildet ist und die Trageinrichtung entsprechend als Positionierfläche einen Bolzen bzw. eine Bohrung aufweist.

Wenn der Positionieranschluss mit der Anschlussfläche an einer Positionierfläche der Trageinrichtung positioniert ist, wird der Werkzeughalter, insbesondere der Positionieranschluss, mit einem Verbindungselement an der Trageinrichtung befestigt. Zum Erzielen der Haltekraft zwischen den miteinander verbundenen Teilen, umfasst der Werkzeughalter einen Eingriffsbereich für das Verbindungselement, wobei das Verbindungselement im Eingriff mit dem Eingriffsbereich eine Haltekraft zwischen dem Werkzeughalter und der Trageinrichtung erzielbar macht. Wenn das Verbindungselement eine Schraube ist, so ist der Eingriffsbereich vorzugsweise eine Bohrung, gegebenenfalls mit einem Innengewinde. Die Schraube kann mit dem Schraubenkopf an der Öffnung der Bohrung anliegen und in ein Gewinde der Trageinrichtung eingeschraubt sein. Gegebenenfalls liegt der Schraubenkopf an einer Bohrung der Trageinrichtung an und ist in ein Gewinde des Werkzeughalters geschraubt.

Der Werkzeughalter und die Trageinrichtung sind vorzugsweise so ausgebildet, dass der Antriebsanschluss beim hinteren Ende der Welle eines an der Trageinrichtung befestigten Werkzeughalters formschlüssig in eine Antriebsübertragung der Trageinrichtung eingreift. In einer vorteilhaften Ausführungsform ist der Antriebsanschluss des Werkzeughalters als Zahnrad ausgebildet, welches nach der Befestigung des Werkzeughalters an der Trageinrichtung in ein antreibbares Zahnrad der Trageinrichtung eingreift.

Die Zeichnungen erläutern die Erfindung anhand von zwei Ausführungsbeispielen, auf die sie aber nicht eingeschränkt ist. Dabei zeigen
- Fig. 1: eine perspektivische Darstellung eines Werkzeughalters mit einem im Innern einer zylindrischen Kontaktfläche eingespannten Werkzeug,
- Fig. 2 bis 4: perspektivische Darstellungen des Werkzeughalters gemäss Fig. 1 mit aufgeschnittenen Bereichen,
- Fig. 5: stirnseitige Ansicht des Werkzeughalters gemäss Fig. 1 mit einem aufgeschnittenen Bereich,
- Fig. 6: eine perspektivische Darstellung eines Werkzeughalters mit einem an der Aussenseite einer zylindrischen Kontaktfläche eingespannten Werkzeug,
- Fig. 7: eine perspektivische Darstellung der Vorderseite einer Trageinrichtung mit eingesetzten Werkzeughaltern, und
- Fig. 8: eine perspektivische Darstellung der Rückseite einer Trageinrichtung mit Werkzeughaltern,

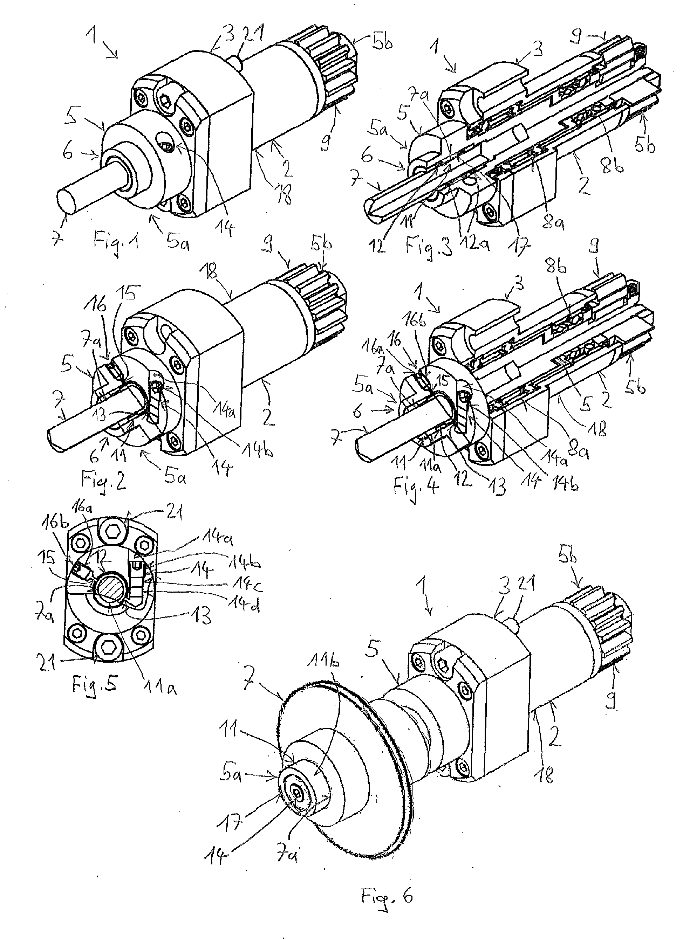

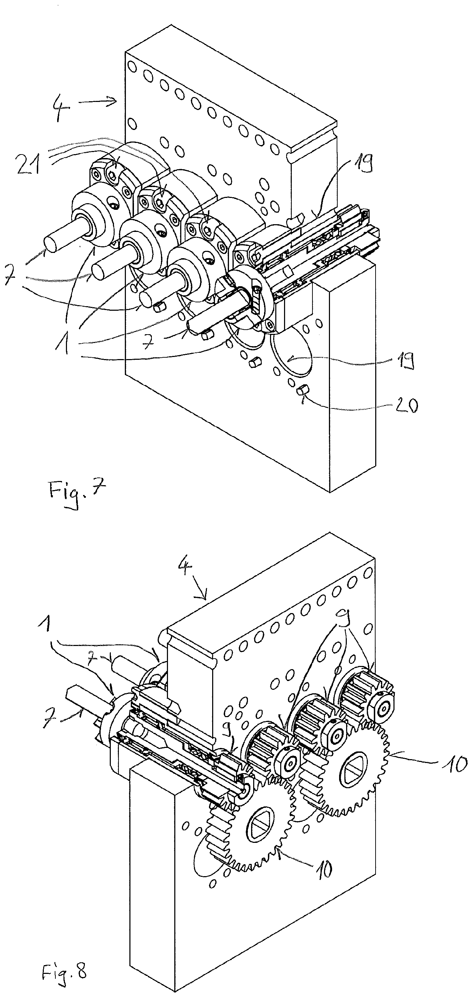

Die Figuren 1 bis 5 zeigen einen erfindungsgemässen Werkzeughalter 1 mit einem Gehäuse 2, das einen Positionieranschluss 3 für das in den Figuren 7 und 8 dargestellte Positionieren an einer Trageinrichtung 4 einer Bearbeitungsmaschine aufweist. Der Werkzeughalter 1 umfasst eine sich entlang einer Wellenachse erstreckende Welle 5. Bei einem vorderen Ende 5a der Welle 5 umfasst der Werkzeughalter 1 eine Werkzeugaufnahme 6 zum Spannen des Anschlussbereiches eines Werkzeuges 7.

Die Welle 5 ist am Gehäuse 2 von einer Drehlagerung um die Wellenachse drehbar gelagert. Die Drehlagerung der Welle 5 umfasst ein vorderes Drehlager 8a und ein hinteres Drehlager 8b, von denen das vordere Drehlager 8a näher beim vorderen Ende 5a der Welle 5 liegt als das hintere Drehlager 8b. Die Welle 5 weist bei einem vom vorderen Ende 5a abgewandten hinteren Ende 5b einen Antriebsanschluss 9, vorzugsweise in der Form eines Zahnrades auf. Wie in Fig. 8 dargestellt, ist der Antriebsanschluss 9, bzw. das Zahnrad, am hinteren Ende 5b der Welle 5 so ausgebildet, dass er nach dem Anordnen des Werkzeughalters 1 an der Trageinrichtung 4 von einer Antriebsübertragung 10, insbesondere einem angetriebenen Zahnrad, der Trageinrichtung 4 antreibbar ist.

Die Werkzeugaufnahme 1 weist bei einem Kontaktbereich 11, an welchen der Anschlussbereich 7a des zu spannenden Werkzeuges 7 anlegbar ist, eine Druckkammer 12 mit zwei konzentrisch zur Wellenachse ausgebildeten, mit einem Druckmedium befüllbaren Druckkammerbereichen 12a auf. Die Druckkammerbereiche 12a sind relativ zueinander in Richtung der Wellenachse beabstandet angeordnet und in der Welle 5 über eine Druckmedium-Verbindung 13 mit einer Druckerzeugungs-Vorrichtung 14 verbunden. Die Druckerzeugungs-Vorrichtung 14 ist in einem Bereich angeordnet, der sich vom vorderen Ende 5a der Welle 5 bis zum vorderen Drehlager 8a erstreckt.

In der dargestellten Ausführungsform umfasst die Druckerzeugungs-Vorrichtung 14 in der Welle 5 eine Druckerzeugungs-Bohrung 14a mit Gewinde und eine in diese Druckerzeugungs-Bohrung 14a einschraubbare Druckschraube 14b. Damit das Druckmedium bei der Druckschraube 14b nicht entweichen kann, umfasst die Druckerzeugungs-Vorrichtung 14 vorzugsweise bei dem der Druckmedium-Verbindung 13 zugewandten Ende der Druckschraube 14b in einem gewindefreien Bereich der Druckerzeugungs-Bohrung 14a einen Druckkolben 14c und einen Dichtungskolben 14d. Das in die Druckkammerbereiche 12a und die Druckmedium-Verbindung 13 eingefüllte Druckmedium macht durch das Einschrauben der Druckschraube 14b den für die kraftschlüssige Verbindung nötigen Druck in den Druckkammerbereichen 12a erzielbar.

In der dargestellten Ausführungsform sind die Druckkammerbereiche 12a über eine in der Welle 5 ausgebildete Entlüftungs-Verbindung 15 mit einer verschliessbaren Entlüftungs-Vorrichtung 16 verbunden, wobei die verschliessbare Entlüftungs-Vorrichtung 16 in einem Bereich angeordnet ist, der sich vom vorderen Ende 5a der Welle 5 bis zum vorderen Drehlager 8a erstreckt. Die Entlüftungs-Vorrichtung 16 weist in der Welle 5 eine Entlüftungs-Bohrung 16a mit Gewinde und eine in diese Entlüftungs-Bohrung 16a einschraubbare Entlüftungsschraube 16b auf. Nach dem Einfüllen des Druckmediums kann beim Einschrauben der Entlüftungsschraube 16b Luft oder Druckfluid durch einen Austrittskanal der Entlüftungsschraube 16b austreten. Wenn die eingeschraubte Entlüftungsschraube 16b mit einem Dichtungsbereich ihres vorausgehenden Endes an einer Verengung der Entlüftungs-Bohrung 16a anliegt, ist die Entlüftungs-Bohrung 16a verschlossen und in den Druckkammerbereichen 12a, in der Druckmedium-Verbindung 13 und in der Entlüftungs-Verbindung 15 ist nur Druckmedium enthalten, so dass der für die kraftschlüssige Verbindung nötige Druck durch die Druckerzeugungs-Vorrichtung 14 ohne Störung erzielbar ist.

Bei der dargestellten Ausführungsform erstrecken sich die Achsen der Entlüftungs-Vorrichtung 16, der Entlüftungs-Verbindung 15 und der Druckmedium-Verbindung 13 entlang einer gemeinsamen Geraden, welche die Wellenachse schneidet. Beim Einfüllen des Druckmediums durch die Druckmedium-Verbindung kann die Welle 5 so ausgerichtet werden, dass das Druckmedium aufsteigend die Druckmedium-Verbindung 13, die Druckkammerbereiche 12a und die Entlüftungs-Verbindung 15 auffüllt.

Die Achse der Druckerzeugungs-Bohrung 14a erstreckt sich tangential zu einem Kreis um die Wellenachse, so dass sich diese Bohrung im Vergleich zu einer radialen Bohrung über eine grössere Länge in der Welle 5 erstrecken kann. Die Zugänge zur Druckerzeugungs-Bohrung 14a und zur Entlüftungs-Bohrung 16a sind vorzugsweise so angeordnet, dass bei einer passenden Wellenlage beide Zugänge oberhalb der Druckkammerbereiche 12a liegen. Nach dem vollständigen Befüllen mit Druckmedium wird bei einem nach oben gerichteten Zugang zur Druckerzeugungs-Bohrung 14a die Druckschraube 14b mit Dichtungskolben 14d und mit Druckkolben 14c in die Druckerzeugungs-Bohrung 14a eingeführt. Anschliessend wird die Entlüftungsschraube 14b eingeschraubt.

Die Druckkammerbereiche 12a erzielen bei an den Kontaktbereich 11 angrenzendem Anschlussbereich 7a des Werkzeugs 7 und bei von der Druckerzeugungs-Vorrichtung 14 aufgebautem Druck in den Druckkammerbereichen 12a zwischen dem Kontaktbereich 11 und dem Anschlussbereich 7a des Werkzeuges 7 durch Verformungen des Kontaktbereichs 11 gegen den Anschlussbereich 7a eine kraftschlüssig Verbindung. Als Druckmedium wird vorzugsweise Öl oder gegebenenfalls Fett verwendet.

Der in den Figuren 1 bis 5, 7 und 8 dargestellte Werkzeughalter weist beim Kontaktbereich 11 ein konzentrisch zur Wellenachse in der Welle 5 ausgebildetes zylindrisches Loch 11a und in diesem eine der Wellenachse zugewandte zylindrische Kontaktfläche auf. Das zylindrische Loch 11a, bzw. die von einer Innenfläche gebildete zylindrische Kontaktfläche ist zur Aufnahme eines Anschlussbereichs 7a des Werkzeuges 7 in der Form eines zylindrischen Schaftes ausgelegt.

Der in der Figur 6 dargestellte Werkzeughalter 1 weist beim Kontaktbereich 11 einen konzentrisch zur Wellenachse ausgebildeten zylindrischen Endbereich 11b und an diesem eine von der Wellenachse abgewandte zylindrische Kontaktfläche auf. Der zylindrische Endbereich 11b, bzw. die von einer Aussenfläche gebildete zylindrische Kontaktfläche, ist zur Aufnahme eines Anschlussbereichs 7a des Werkzeuges 7 in der Form eines zylindrischen Durchgangs bzw. einer zylindrischen Bohrung ausgelegt, wobei die von der Wellenachse abgewandte zylindrische Kontaktfläche einen Durchmesser aufweist, der an den Durchmesser der zylindrischen Bohrung des einzusetzenden Werkzeugs 7 so angepasst ist, dass das Werkzeug 7 noch über den von der Kontaktfläche gebildeten Zylinderabschnitt schiebbar ist. Bei von der Druckerzeugungs-Vorrichtung 14 in den Druckkammerbereichen 12a aufgebautem Druck wird zwischen dem Kontaktbereich 11 und dem Anschlussbereich 7a des Werkzeuges 7 durch Verformungen des Kontaktbereichs 11 gegen den Anschlussbereich 7a des Werkzeuges 7 eine kraftschlüssige Verbindung erzielt.

Das in der Figur 6 schematisch dargestellte Werkzeug erstreckt sich radial vom Anschlussbereich 7a, bzw. von einem im Querschnitt ringförmigen Werkzeuganschluss, weg und ist beispielsweise als Kreissägeblatt ausgebildet. Bei der Stirnfläche des zylindrischen Endbereichs 11b ist die Druckerzeugungs-Vorrichtung 14 eingesetzt. Die Entlüftungs-Vorrichtung ist beispielsweise zwischen dem Werkzeuganschluss und dem Positionieranschluss 3 an der Welle 5 angeordnet.

Bei beiden in den Figuren 1 bis 8 dargestellten Ausführungsformen ist die Kontaktfläche an einer mit der Welle 5 verbundenen Hülse 17 ausgebildet. Die Hülse 17 berandet die Druckkammerbereiche 12a gegen den Anschlussbereich 7a des zu spannenden Werkzeugs 7 und ist bei ihren stirnseitigen Enden dicht mit der Welle 5 verbunden. Insbesondere sind die Druckkammerbereiche 12a als von der Kontaktfläche abgewandt angeordnete Ausnehmungen in der Hülse 17 ausgebildet.

Der Positionieranschluss 3 umfasst einen Abschnitt des Gehäuses 2, welcher Abschnitt als Anschlussfläche 18 zum Positionieren des Werkzeughalters 1 an einer von einer Bohrung in der Trageinrichtung 4 gebildeten Positionierfläche 19 dient. Die Anschlussfläche 18 kann auch die Innenfläche einer Bohrung umfassen, welche zum Positionieren mit einem Bolzen 20 der Trageinrichtung 4 zusammenwirkt. Ein positionierter Werkzeughalter 4 wird beispielsweise mit zwei Befestigungsschrauben 21 an der Trageinrichtung 4 befestigt.

## Patentansprüche

1. Werkzeughalter (1) mit einem Gehäuse (2), das einen Positionieranschluss (3) für das Positionieren an einer Trageinrichtung (4) einer Bearbeitungsmaschine aufweist, mit einer sich entlang einer Wellenachse erstreckenden Welle (5), welche am Gehäuse (2) von einer Drehlagerung um die Wellenachse drehbar gelagert ist, wobei die Drehlagerung der Welle (5) ein vorderes und ein hinteres Drehlager (8a, 8b) umfasst, von denen das vordere Drehlager (8a) näher bei einem vorderen Ende (5a) der Welle (5) liegt als das hintere Drehlager (8b), und mit einer beim vorderen Ende (5a) der Welle (5) angeordneten Werkzeugaufnahme (6) zum Spannen des Anschlussbereiches (7a) eines Werkzeuges (7), **dadurch gekennzeichnet, dass** die Welle (5) bei einem vom vorderen Ende (5a) abgewandten hinteren Ende (5b) einen Antriebsanschluss (9) aufweist, welcher so ausgebildet ist, dass er nach dem Anordnen des Werkzeughalters (1) an der Trageinrichtung (4) von einer Antriebsübertragung (10) der Trageinrichtung (4) antreibbar ist, und dass die Werkzeugaufnahme (6) bei einem Kontaktbereich (11), an welchen der Anschlussbereich (7a) des zu spannenden Werkzeuges (7) anlegbar ist, eine konzentrisch zur Wellenachse ausgebildete, mit einem Druckmedium befüllbare Druckkammer (12) aufweist, welche in der Welle (5) über eine Druckmedium-Verbindung (13) mit einer Druckerzeugungs-Vorrichtung (14) verbunden ist, wobei die Druckerzeugungs-Vorrichtung (14) in einem Bereich angeordnet ist, der sich vom vorderen Ende (5a) der Welle (5) bis zum vorderen Drehlager (8a) erstreckt, und die Druckkammer (12) bei an den Kontaktbereich (11) angrenzendem Anschlussbereich (7a) des Werkzeugs (7) und bei von der Druckerzeugungs-Vorrichtung (14) in der Druckkammer aufgebautem Druck zwischen dem Kontaktbereich (11) und dem Anschlussbereich (7a) des Werkzeuges (7) durch eine Verformung des Kontaktbereichs (11) gegen den Anschlussbereich (7a) eine kraftschlüssige Verbindung erzielbar macht.

2. Werkzeughalter (1) nach Anspruch 1, **dadurch gekennzeichnet, dass** die Druckkammer mindestens zwei konzentrisch zur Wellenachse ausgebildete Druckkammerbereiche (12a) aufweist, welche relativ zueinander in Richtung der Wellenachse beabstandet angeordnet sind und bei von der Druckerzeugungs-Vorrichtung (14) in der Druckkammer (12) aufgebautem Druck zwischen dem Kontaktbereich (11) und dem Anschlussbereich (7a) des Werkzeuges (7) durch Verformungen des Kontaktbereichs (11) bei den mindestens zwei Druckkammerbereichen (12a) gegen den Anschlussbereich (7a) eine kraftschlüssige Verbindung erzielbar machen.

3. Werkzeughalter (1) nach Anspruch 1 oder 2, **dadurch gekennzeichnet, dass** die Druckerzeugungs-Vorrichtung (14) in der Welle (5) eine Druckerzeugungs-Bohrung (14a) mit Gewinde und eine in dieses Gewinde einschraubbare Druckschraube (14b) aufweist, wobei in die Druckkammer (12) und die Druckmedium-Verbindung (13) eingefülltes Druckmedium durch das Einschrauben der Druckschraube (14b) den für die kraftschlüssige Verbindung nötigen Druck in der Druckkammer (12) erzielbar macht.

4. Werkzeughalter (1) nach Anspruch 1 oder 2, **dadurch gekennzeichnet, dass** die Druckkammer (12) über eine in der Welle (5) ausgebildete Entlüftungs-Verbindung (15) mit einer verschliessbaren Entlüftungs-Vorrichtung (16) verbunden sind, wobei die verschliessbare Entlüftungs-Vorrichtung (16) in einem Bereich angeordnet ist, der sich vom vorderen Ende (5a) der Welle (5) bis zum vorderen Drehlager (8a) erstreckt.

5. Werkzeughalter (1) nach Anspruch 4, **dadurch gekennzeichnet, dass** die Entlüftungs-Vorrichtung (16) in der Welle (5) eine Entlüftungs-Bohrung (16a) mit Gewinde und eine in dieses Gewinde einschraubbare Entlüftungsschraube (16b) aufweist, wobei nach dem Einfüllen des Druckmediums durch das Einschrauben der Entlüftungsschraube (16b) aus der Entlüftungs-Verbindung (15) Luft oder Druckmedium austreten kann, so dass nach dem vollständigen Einschrauben der Entlüftungsschraube (16b) in der Druckmedium-Verbindung (13), in der Druckkammer (12) und in der Entlüftungs-Verbindung (15) nur Druckmedium enthalten ist und der für die kraftschlüssige Verbindung nötigen Druck durch die Druckerzeugungs-Vorrichtung (14) erzielbar ist.

6. Werkzeughalter (1) nach einem der Ansprüche 1 bis 5, **dadurch gekennzeichnet, dass** die Werkzeugaufnahme (6) beim Kontaktbereich (11) ein konzentrisch zur Wellenachse in der Welle (5) ausgebildetes zylindrisches Loch (11a) und in diesem eine der Wellenachse zugewandte zylindrische Kontaktfläche aufweist.

7. Werkzeughalter (1) nach einem der Ansprüche 1 bis 5, **dadurch gekennzeichnet, dass** die Werkzeugaufnahme (6) beim Kontaktbereich (11) einen konzentrisch zur Wellenachse ausgebildeten zylindrischen Endbereich (11b) und an diesem eine von der Wellenachse abgewandte zylindrische Kontaktfläche aufweist.

8. Werkzeughalter (1) nach Anspruch 6 oder 7, **dadurch gekennzeichnet, dass** die Kontaktfläche an einer Hülse (17) ausgebildet ist, wobei die Hülse (17) die Druckkammer (12) gegen den Anschlussbereich (7a) des zu spannenden Werkzeugs (7) berandet und bei ihren stirnseitigen Enden dicht mit der Welle (5) verbunden ist.

9. Werkzeughalter (1) nach Anspruch 8, **dadurch gekennzeichnet, dass** die Druckkammer (12) als Ausnehmungen in der Hülse (17) ausgebildet sind.

10. Werkzeughalter (1) nach einem der Ansprüche 1 bis 9, **dadurch gekennzeichnet, dass** der Werkzeughalter (1) einen an den Kontaktbereich (11) anschliessenden Adapter umfasst, an welchen der Anschlussbereich (7a) des zu spannenden Werkzeuges (7) anlegbar ist, wobei ein von der Druckerzeugungs-Vorrichtung (14) in der Druckkammer (12) aufgebauter Druck eine Verformung des Adapters gegen den Anschlussbereich (7a) des zu spannenden Werkzeuges (7) und mit dieser Verformung eine kraftschlüssige Verbindung vom Kontaktbereich (11) über den Adapter zum Anschlussbereich (7a) des zu spannenden Werkzeugs (7) erzielbar macht.

11. Werkzeughalter (1) nach einem der Ansprüche 1 bis 10, **dadurch gekennzeichnet, dass** der Positionieranschluss (2) mindestens eine Anschlussfläche (18) umfasst, welche zum Positionieren des Werkzeughalters (1) an eine Positionierfläche (19) der Trageinrichtung (4) anlegbar ist.

12. Werkzeughalter (1) nach Anspruch 11, **dadurch gekennzeichnet, dass** der Werkzeughalter (1) einen Eingriffsbereich für ein Verbindungselement (21) umfasst, wobei das Verbindungselement (21) im Eingriff mit dem Eingriffsbereich eine Haltekraft zwischen dem Werkzeughalter (1) und der Trageinrichtung (4) erzielbar macht.
